# EUROPÄISCHE PATENTSCHRIFT

(11) **EP 0 992 294 B1**
(45) Veröffentlichungstag und Bekanntmachung des Hinweises auf die Patenterteilung: **09.03.2005**
(21) Anmeldenummer: 99119163.6
(22) Anmeldetag: 06.10.1999
(51) Int. Cl.: B08B 3/02, G21C 19/46

(54) **Vorrichtung und Verfahren zur Umspülung von Brennelementen**
Device and method for washing fuel elements
Dispositif et procédé pour laver des éléments combustibles

(30) Priorität: 09.10.1998 DE 19846591
(43) Veröffentlichungstag der Anmeldung: 12.04.2000
(73) Patentinhaber: Gabelgaard, Keld, 71717 Beilstein (DE)
(72) Erfinder: Gabelgaard, Keld, 71717 Beilstein (DE)
(74) Vertreter: Heselberger, Johannes

(56) Entgegenhaltungen:
- EP-A- 0 061 792
- EP-A- 0 615 792
- DE-A- 4 129 362
- US-A- 5 092 355

## Beschreibung

Die vorliegende Erfindung betrifft eine Vorrichtung und ein Verfahren zur Umspülung, insbesondere zur Reinigung von Brennelementen zur Vermeidung des unkontrollierten Ablösens der an der Oberfläche der Hüllrohre von Brennelementen haftenden Verunreinigungen beim Transport der Brennelemente, beispielsweise vom Reaktordruckgefäß zu entsprechend vorgesehenen Brennelement-Lagergestellen.

Nach ihrer Einsatzzeit im Reaktor werden die abgebrannten Brennelemente aus dem Reaktor herausgenommen und vor der Weiterverarbeitung zunächst in einem Brennelementlager zwischengelagert. Nach dem Abfahren der Anlage und der Verringerung der Temperatur lösen sich die an der Oberfläche der Hüllrohre von Brennelementen haftenden Verunreinigungen, welche in der Kraflwerksterminologie als "Crud" bezeichnet werden. Dieser Effekt des Ablösens wird beim Transport der Brennelemente unter Wasser vom Reaktordruckgefäß zu den Brennelement-Lagergestellen bzw. von den Brennelement-Lagergestellen zu den Transportbehältern verstärkt. Beim Entladen unter Wasser wird der zuvor geflutete Behälter in den Entladeteil des als Wasserbecken ausgebildeten Lagers abgesenkt. Nach Öffnen der Transportbehälter werden die 4-5 Meter langen Brennelemente dem Behälter mit Hilfe von Unterwassergreifwerkzeugen entnommen, in Büchsen eingesetzt und mit einem Kran in die Lagergestelle verbracht. Das Wasser dient als Abschirmung und gewährleistet zugleich eine ausgezeichnete Sicht bei den Entlade - Hantierungen. Andererseits fördert es aber infolge seiner Strömungsbewegung gleichzeitig auch, wie erwähnt, den Ablöseeffekt des Cruds von den Brennelementen, wodurch das Brennelement - Lagerbecken verschmutzt wird.

Aus der DE 41 29 362 A1 ist eine Reinigungsvorrichtung bekannt, die oberhalb einer am Beckenrand angeordneten Sippingbox installiert ist. Beim Be- oder Entladen der Sippingbox kann damit zusätzlich eine Reinigung des Brennelementes in der im Oberbegriff des Anspruchs 1 angegebenen Art erfolgen.

Auch diese Vorrichtung kann jedoch nicht verhindern, dass das Wasser eines Brennelementebeckens durch Verunreinigungen, die sich vom Brennelement lösen, verschmutzt wird. Der vorliegenden Erfindung liegt daher das Problem zugrunde ein Verfahren und eine Vorrichtung bereitzustellen, mit dem ein Brennelement gereinigt werden kann, ohne dass es zu einer Kontaminierung der Umgebung, insbesondere des Wasser eines Brennelementebeckens, kommt.

Erfindungsgemäß wird diese Aufgabe durch eine Vorrichtung und ein Verfahren, wie sie in den unabhängigen Ansprüchen definiert sind, gelöst. Zweckmäßige Weiterbildungen sind in den Unteransprüchen angegeben.

Das Brennelement kann dabei jede beliebige Form und jeden beliebigen Querschnitt aufweisen. Der Rahmen muß dann gegebenenfalls an diese Form angepaßt werden. Der Rahmen kann dabei aus einem oder mehreren Teilen bestehen, die miteinander verbunden oder auch voneinander getrennt sein können. Der erste und der zweite Umfangsabschnitt des Rahmens sind frei gewählte Abschnitte des Umfangs des Rahmens. Bei einem rechteckigen Rahmen kann ein Umfangsabschnitt etwa einer Seite des Rechtecks entsprechen, der Umfangsabschnitt kann sich jedoch auch aus zwei, insbesondere aneinander angrenzenden Seiten oder aus Teilen mehrerer Seiten des Rechtecks zusammensetzen. Die Absaugöffnung in dem zweiten Umfangsabschnitt des Rahmens kann in einer Öffnung mit beliebigem Querschnitt bestehen, die mit einer Saugvorrichtung verbunden ist, so daß Flüssigkeit oder Gas abgesaugt werden können. Die Absaugung erfolgt durch eine, vom Rahmen getrennte oder mit dem Rahmen verbundene Saugeinrichtung, etwa eine Saugpumpe. Die zur Umspülung dienende Flüssigkeit oder das entsprechende Gas werden dann über die Ableitung entfernt. In der Anwendung für Kernkraftwerke, bei der die Brennelemente unter Wasser gehandhabt werden, bietet sich ein Unterwassersauggerät an, das an die Absaugöffnungen angeschlossen wird. Die zur Umspülung verwendete Flüssigkeit oder das entsprechende Gas können aus der Umgebung des Rahmens entnommen werden, so daß die Umspülungswirkung ausschließlich durch die Saugwirkung der Absaugöffnungen zustande kommt. Bei Kernkraftwerken wird in diesem Fall einfach das Wasser des Brennelemente- oder Lagerbeckens als Spülflüssigkeit verwendet.

In einer bevorzugten Ausführungsform weist der Rahmen jedoch in mindestens dem ersten Umfangsabschnitt mindestens eine Ausströmöffnung für die mindestens eine Flüssigkeit und/oder das mindestens eine Gas auf. Gleichzeitig besitzt die Vorrichtung eine Zuleitung für die mindestens eine Flüssigkeit und/oder das mindestens eine Gas zu der mindestens einen Ausströmöffnung des Rahmens. Es besteht somit die Möglichkeit, die mindestens eine Flüssigkeit und/oder das mindestens eine Gas unter im wesentlichen frei wählbarem Druck, der nur durch die Gegebenheiten der Vorrichtung vorgegeben ist, durch die Zuleitung zu der mindestens einen Austrittsöffnung zu leiten und die mindestens eine Flüssigkeit und/oder das mindestens eine Gas dadurch auf das mindestens eine Stabelement treffen zu lassen. Im Rahmen der Erfindung ist regelmäßig ein hoher Druck für die Effektivität der Umspülung vorteilhaft. Außerdem bietet diese Anordnung den Vorteil, daß man die Umspülsubstanz in gewissen Grenzen frei wählen kann, also nicht auf das gerade in der Umgebung vorhandene Medium begrenzt ist, etwa Luft oder Wasser. Da die Spülsubstanz wieder abgesaugt wird, können auch Substanzen verwendet werden, die nicht oder nicht in größeren Mengen in die Umgebung gelangen sollen oder die aus wirtschaftlichen Gründen wiedergewonnen werden sollen.

Bei Kernkraftwerken dient die Umspülung vor allem, wie oben beschrieben, der Oberflächenreinigung der Brennelemente. Dabei wird zum Umspülen Becken- oder Zusatzwasser verwendet. Zum Absaugen wird dabei vorzugsweise ein Unterwassersauger verwendet.

Vorzugsweise umschließt der Rahmen das stabförmige Brennelement vollständig, so daß eine komplette Umspülung des mindestens einen Stabelementes gewährleistet ist. Vorzugsweise dient die Umspülung des mindestens einen Stabelementes zur Reinigung der Oberfläche desselben, was aus Effektivitätsgründen zweckmäßigerweise durch eine möglichst vollständige Umspülung des Stabelementes mit der mindestens einen Flüssigkeit und/oder mit dem mindestens einen Gas erreicht wird. Ein vollständiges Umschließen des Rahmens bedeutet dabei nicht, daß der Rahmen aus einem Teil oder aus fest miteinander verbundenen Teilen bestehen muß. Es genügt, wenn keine größeren Spalte zwischen den Rahmenteilen bestehen, so daß kein relevanter Teil des Stabelements unbehandelt, das heißt von Zusatzwasser unbetroffen bleibt.

In einer weiteren bevorzugten Ausführungsfonn ist an der Oberseite und/oder Unterseite des Rahmens mindestens ein Dichtelement derart angeordnet, daß eine Abdichtung gegenüber dem Stabelement erfolgt. Dadurch beim Durchführen des mindestens einen Stabelements durch den Rahmen der Anteil der gelösten und tatsächlich abgesaugten Bestandteile, etwa des ,Cruds", erhöht. Dies kann durch eine schlichte Erhöhung der Saugwirkung in dem stärker abgedichteten Umgebungsbereich des Stabelements geschehen. Das Durchführen des Stabelements durch dieses Dichtelement kann jedoch auch zu einem mechanischen Abstreifen des Stabelements führen, womit lose haftende Verunreinigungspartikel von der Oberfläche des Stabelements abgetrennt werden. Daraus ergibt sich, daß unter Abdichten" nicht ein Flüssigkeits- oder Gasdichte Abschluß verstanden wird, sondern eine Definierung eines Raumes um das Stabelement herum, die zu einem effizienteren Saugverhalten führt, indem das Einsaugen von Umgebungsmedium reduziert wird.

In einer bevorzugten Ausführungsform weist der Rahmen eine Rechteckform auf, wobei zwei aneinander angrenzende Seiten des Rechtecks jeweils mindestens eine Ausströmöffnung und die anderen beiden Seiten jeweils mindestens eine Absaugöffnung aufweisen. Diese diagonale Anordnung der Ausstömungöffnungen relativ zu den Absaugöffnungen erlaubt das gleichzeitige Bearbeiten, insbesondere das gleichzeitige Reinigen des Stabelementes von zwei Seiten her. Verwendet man diese bevorzugte Ausführungsform nicht, so kann man die Vorrichtung auch drehen und so in aufeinanderfolgenden Arbeitsgängen das Stabelement umspülen. Es ist dabei auch möglich, den Rahmen während der Bewegung des Stabelements durch den Rahmen hindurch fortlaufend oder in bestimmten Zeitabständen zu drehen und damit das Stabelement von allen Seiten zu reinigen.

In einer bevorzugten Ausführungsform weist die Gesamtheit der Ableitungen einen größeren Querschnitt auf als die Gesamtheit der Zuleitungen. Somit wird sichergestellt, daß mit Hilfe der Absaugöffnung und den Ableitungen mindestens das Flüssigkeits- und/oder Gasvolumen aufgenommen bzw. abgesaugt werden kann, das durch die Zuleitungen eingespeist wird, zuzüglich der nach der Umspülung in der mindestens einen Flüssigkeit und/oder des mindestens einen Gases enthaltenen bzw. gelösten Verunreinigungspartikel, die von der Oberfläche des mindestens einen Stabelements durch die Umspülung weggeschwemmt werden. Es wird so eine kontinuierliche Strömung zwischen den Ausströmöffnungen und den Absaugöffnungen aufrechterhalten, ohne eine Stauung der zugeleiteten Flüssigkeit oder des zugeleiteten Gases aufgrund mangelnder Absaugkapazität zu riskieren.

In einer weiteren bevorzugten Ausführungsform weist der Rahmen mindestens eine Vorrichtung zur Erzeugung von Ultraschallschwingungen auf. Damit wird die das mindestens eine Stabelement umspülende Flüssigkeit zusätzlich zu ihrer Bewegung in Richtung einer der Absaugöffnungen aufgrund der von diesen ausgehenden Sogwirkung auch noch in eine Art Vibrationszustand versetzt. Dies wiederum bewirkt einen besseren Reinigungseffekt der das Stabelement umspülenden Flüssigkeit und/oder Gases. Zusätzlich bewirken die Ultraschallschwingungen auch unmittelbar ein leichteres Ablösen von Verunreinigungspartikeln von der Stabelementoberfläche.

Das stetige Zuleiten zu und das gleichzeitige Absaugen von Flüssigkeit und/oder Gas von dem mindestens einen Stabelement bewirkt eine ständige Umströmung des Stab-elements mit der entsprechenden Flüssigkeit und/oder des Gases. Das wiederum hat zur Folge, daß es zwischen der Oberfläche des Stabelementes und der sie umströmenden Flüssigkeit und/oder des Gases ständig zu Reibungseffekten kommt, aufgrund welcher Verunreinigungspartikel auf der Stabelementoberfläche abgelöst und mit der strömenden Flüssigkeit und/oder dem Gas mitgerissen werden können. Hierauf beruht der eigentliche Reinigungseffekt. Durch das Absaugen von Flüssigkeit und/oder Gas werden weiterhin zusammen mit der entsprechenden Flüssigkeit und/oder dem entsprechenden Gas die von der Stabelementoberfläche abgelösten Verunreinigungspartikel abgesaugt, womit auch eine neuerliche Anlagerung an die Stabelementoberfläche weitestgehend verhindert wird.

In einer bevorzugten Ausführungsform des erfindungsgemäßen Verfahrens erfolgt die Zuleitung der mindestens einen Flüssigkeit und/oder des mindestens einen Gases zu Ausströmöffnungen, die an mindestens einem ersten Umfangsabschnitt des Rahmens angeordnet sind. Dabei wird die mindestens eine Flüssigkeit und/oder das mindestens eine Gas vorzugsweise mit einem Druck zwischen 3 bar und 150 bar, vorzugsweise zwischen 10 bar und 30 bar, eingeleitet, so daß die mindestens eine Flüssigkeit und/oder das mindestens eine Gas mit einem größeren Impuls auf das mindestens eine Stabelement auftrifft. Auch das bloße "Vorbeistreifen" der Flüssigkeit und/oder des Gases an der Stabelementoberfläche ist mit einer erhöhten Reibung verbunden und somit mit einem größeren Ablöseeffekt von auf der Staboberfläche befindlichen Verunreinigungspartikeln, d.h. der Reinigungseffekt ist größer als bei geringerem Druck.

Das beschriebene erfindungsgemäße Verfahren und/oder die erfindungsgemäße Vorrichtung werden vorzugsweise zur Reinigung von Brennelmenten von Kernkraftwerken verwendet. Wie bereits in der Einleitung erläutert, liegt die Ursache von Verschmutzungen im Reaktorbecken eines Kernkraftwerks und in dem Brennelement-Lager-Becken in den zum größten Teil an der Oberfläche der Hüllrohre von Brennelementen haftenden Verunreinigungen, dem Crud. Nach dem Abfahren der Anlage und der Verringerung der Temperatur löst sich der Crud von der Oberfläche. Dieser Effekt des Ablösens wird beim Transport der Brennelemente zumeist unter Wasser zwischen dem Reaktordruckgefäß und den Brennelement-Lagergestellen bzw. dem Brennelement-Lagergestell und den Transportbehältern verstärkt. Die Brennelemente werden in hängender Position mittels einer Lademaschine oder sonstigen Greifvorrichtung im Wasser bewegt. Das Beckenwasser durchfließt dabei die Hüllrohre. Zur Vermeidung des unkontrollierten Ablösens des Crud an den Brennelement-Hüllrohren wird erfindungsgemäß das erfindungsgemäße Verfahren oder die erfindungsgemäße Vorrichtung verwendet, um damit beim vertikalen Herausheben der Brennelemente aus den Lagergestellen bzw. dem Gestell im Reaktordruckgefäß einen oder auch mehrere hintereinander geschaltete Reinigungsschritte durchzuführen, so daß die Verunreinigungen nicht mehr in das Reaktorbecken oder in das Brennelement-Lagerbecken gelangen, sondern schon vorher beseitigt werden.

Vorzugsweise werden die Brennelemente in vertikaler Ausrichtung während des Ausbaus durch den Rahmen der erfindungsgemäßen Vorrichtung hindurchgeführt und dabei gereinigt.

Vorzugsweise wird hierbei zur Reinigung eine einstufige Diagonalspülung vorgenommen. Die erfindungsmäßige Vorrichtung weist hierbei vorzugsweise einen rechteckigen Rahmen auf An diesem Rahmen ist eine von oben nach unten führende, seitliche Zuleitung angeordnet, die wiederum vorzugsweise mit Abzweigungen zu düsenförmigen, zueinander benachbarten Ausströmöffnungen in dem Rahmen versehen ist. Diese Ausströmöffnungen sind vorzugsweise an zwei aneinandergrenzenden Seiten des rechteckigen Rahmens vorgesehen. Auf den verbleibenden, beiden gegenüberliegenden Seiten des rechteckigen Rahmens befindet sich die Gesamtheit der Ableitungen, die ähnlich gestaltet ist wie die Gesamtheit der Zuleitungen, jedoch mit einem wesentlich größeren Querschnitt. Es bietet sich dadurch die Möglichkeit in einer bevorzugten Vorgehensweise auf der Seite der Zuleitung Zusatzwasser mit hohem Druck, bevorzugt in einem Bereich von 3 bar bis 150 bar, besonders bevorzugt von 10 bar bis 30 bar, einzuspeisen und auf der gegenüberliegenden Seite mit starkem Unterdruck mittels eines Unterwassersaugers wieder abzusaugen. Aufgrund der Anordnung der Ausstrittsöffnungen relativ zu den Absaugöffnungen ergibt sich so eine bezüglich des Rahmens diagonale Strömung bzw. Spülung. Diese Diagonaltechnik erlaubt das vollständige Umschließen des Brennelementes und das gleichzeitige Bearbeiten von zwei Seiten. Bei der Diagonalspülung versucht der Flüssigkeitsstrom das Bündel von Brennelementen zu durchwandern, um auf der Gegenseite abgesaugt zu werden.

Das beschriebene Verfahren ist jedoch auch ohne Einspeisung von Zusatzwasser anwendbar. Dabei wird dann einfach das Umgebungsmedium, also etwa das Bekkenwasser, verwendet.

In einer bevorzugten Ausführungsform wird die erfindungsgemäße einstufige Diagonalspülung durch das Nachschalten einer zweiten Stufe in Gegenrichtung verbessert. Nach dem Durchführen des Bündels von Brennelementen durch den ersten Rahmen wird dasselbe Bündel während des fortlaufenden vertikalen Heraushebens aus dem Lagergestell bzw. dem Gestell im Reaktordruckgefäß durch einen zweiten Rahmen geführt, wobei hier dann die Ausströmöffnungen und die Absaugöffnungen so angeordnet sind, daß sich eine der im ersten Rahmen resultierenden diagonalen Strömung entgegenlaufende diagonale Strömung ergibt. Dadurch werden nun die beiden beim Durchführen durch den ersten Rahmen noch nicht bearbeiteten Seiten bearbeitet, d.h. gereinigt. Es handelt sich hierbei um ein zweistufige Diagonalspülung.

In einer weiteren bevorzugten Ausführungsform werden als Verstärkung der beiden vorgenannten Diagonalspülungen Vorrichtungen zur Erzeugung von Ultraschall-Schwingungen, sogenannte Ultraschall-Schwinger, eingesetzt. Diese sind an dem erfindungsgemäßen Rahmen angeordnet. Durch diese Ultraschallschwinger wird die Flüssigkeit in einen Vibrationszustand versetzt, wodurch der Reinigungseffekt noch verstärkt wird.

Weitere Vorteile, Merkmale und Anwendungsmöglichkeiten der vorliegenden Erfindung ergeben sich aus der nachfolgenden Beschreibung von Ausführungsbeispielen in Verbindung mit den Zeichnungen. Es zeigen:
- Figur 1:: Perspektivische Darstellung einer erfindungsgemäßen Vorrichtung zur Umspülung eines Bündels von Brennelementen eines Kernreaktors, wobei das Zuleiten einer zur Umspülung verwendeten Flüssigkeit bei Niederdruck erfolgt;
- Figur 2:: Perspektivische Darstellung einer anderen erfindungsgemäßen Vorrichtung zur Umspülung eines Bündels von Brennelementen eines Kernreaktors, wobei die Zuleitung einer zur Umspülung verwendeten Flüssigkeit bei Hochdruck erfolgt;
- Figur 3:: Perspektivische Darstellung einer weiteren erfindungsgemäßen Vorrichtung zur Umspülung eines Bündels von Brennelementen eines Kern-reaktors, wobei die Zuleitung einer zur Umspülung verwendeten Flüssigkeit wahlweise bei Nieder- oder bei Hochdruck durchgeführt werden kann.

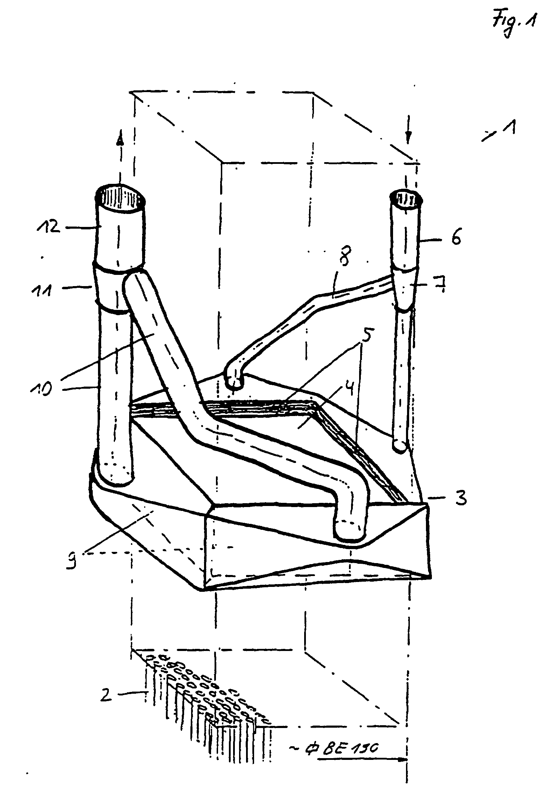

In Figur 1 ist eine erfindungsgemäße Vorrichtung 1 zur Umspülung mindestens eines Stabelementes mit mindestens einer Flüssigkeit und/oder einem Gas dargestellt. Die hier dargestellte Vorrichtung 1 dient im speziellen der Reinigung eines Bündels von Brennelementen 2 während dessen Ausbau aus einem Reaktordruckgefäß oder aus einem Lagergestell. Der erfindungsgemäße Rahmen 3 der Vorrichtung bildet eine rechteckige Öffnung 4, durch die das Bündel von Brennelementen 2 hindurchgeführt wird. Zwei aneinander grenzende Innenseiten des dargestellten Rahmens 3 weisen sich jeweils über die ganze Seitenlänge erstreckende schmale, schlitzartige Öffnungen auf, die als Ausströmöffnungen 5 dienen. In der hier vorliegenden Darstellung befindet sich auf der rechten Seite eine Zuleitung 6 für die zur Reinigung verwendete Flüssigkeit, insbesondere für Zusatzwasser. Die Zuleitung 6 verläuft vertikal von oben nach unten. In ihrem oberen Abschnitt weist sie eine Verzweigungsstelle 7 auf Von hier aus wird ein Teil der eingeleiteten Flüssigkeit weiter vertikal nach unten zu der ersten der beiden Ausströmöffnungen 5 geleitet und der andere Teil der eingeleiteten Flüssigkeit in eine Abzweigung 8 zu der zweiten der beiden Ausströmöffnungen 5 umgeleitet. Die beiden verbleibenden gegenüberliegenden aneinandergrenzenden Innenseiten des Rahmens 3 weisen ebenfalls jeweils eine Öffnung auf, die als Absaugöffnungen 9 dienen. Der Querschnitt der Absaugöffnungen 9 ist größer als der der Ausströmöffnungen 5. Von den Absaugöffnungen 9 weg führt jeweils eine Ableitung 10. Die beiden hier dargestellten Ableitungen 10 laufen in einem Verbindungsstück 11 zu einer relativ zu den einzelnen Ableitungen 10 querschnittsvergrößerten Gesamtableitung 12 zusammen. Diese führt vertikal nach oben. Das Bündel von Brennelementen 2 wird in vertikaler Ausrichtung durch den Rahmen 3 hindurchgeführt. Gleichzeitig damit wird ständig Flüssigkeit, insbesondere Zusatzwasser, durch die Zuleitung 6 unter niedrigem Druck eingespeist und zu den Ausströmöffnungen 5 geleitet. Dort strömt sie dann in den rechteckigen Innenbereich des Rahmens 3, durch den auch das Bündel von Brennelementen 2 hindurchgeführt wird. Beim Hindurchführen des Bündels von Brennelementen 2 wird dieses dadurch von dem eingeleiteten und aus den Ausströmöffnungen 5 ausströmenden Zusatzwasser umspült. An den den Ausströmöffnungen 5 gegenüberliegenden Absaugöffnungen 9 wird Flüssigkeit aus dem Innenbereich des Rahmens 3 abgesaugt. Die durch die Umspülung abgelösten und sich nun in der Flüssigkeit befindlichen Verunreinigungspartikel von der Oberfläche der einzelnen Brennelemente 2 werden mitabgesaugt, d.h. die Brennelemente 2 werden somit an ihrer Oberfläche gereinigt.

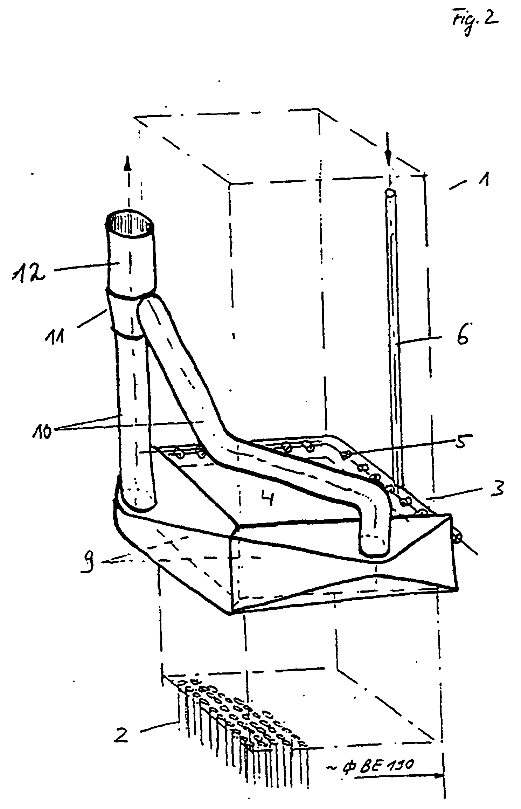

In Figur 2 ist eine andere erfindungsgemäße Vorrichtung 1 zur Umspülung mindestens eines Stabelementes mit mindestens einer Flüssigkeit und/oder einem Gas perspektivisch dargestellt. Auch die hier dargestellte Vorrichtung 1 dient speziell der Reinigung eines Bündels von Brennelementen 2 während dessen Ausbau aus dem Reaktordruckgefäß oder aus einem Lagergestell. Auch hier weist die Vorrichtung 1 einen rechteckigen Rahmen 3 auf, durch den ein Bündel von Brennelementen 2 in vertikaler Ausrichtung hindurchgeführt werden kann. Während die Ableitungen 10, die Gesamtableitung 12 und die Absaugöffnungen 9 sich nicht von denen in Figur 1 unterscheiden, sind sowohl die Zuleitung 6 wie auch die Ausströmöffnungen 5 anders ausgestaltet, als dies in Figur 1 dargestellt ist. Die Zuleitung 6 hat einen vergleichsweise kleinen Querschnitt. Außerdem besitzt sie in ihrem oberen Abschnitt keine Verzweigungsstelle. Sie führt direkt vertikal nach unten zu einer ersten Seite des rechteckigen Rahmens 3. Ein Teil der eingespeisten Flüssigkeit wird erst unmittelbar am Rahmen 3 zu einer an diese erste Seite angrenzenden zweiten Seite des Rahmens 3 umgeleitet. An dieser ersten und zweiten Seite des Rahmens 3 befinden sich jeweils mehrere benachbarte düsenförmige Ausströmöffnungen 5. Diese Ausströmöffnungen 5 sind ebenfalls wesentlich kleiner als die beiden Ausströmöffnungen von Figur 1. Im Gegensatz zu Figur 1 strömt hier die zugeleitete Flüssigkeit unter hohem Druck aus den Ausströmöffnungen 5 in den Innenbereich des Rahmens 3. Das Prinzip des Durchführens eines Bündels von Brennelementen 2 durch den Rahmen 3 ist analog zu dem zu Figur 1 beschriebenen. Die aus den Ausströmöffnungen 5 ausströmende Flüssigkeit prallt auf bzw. streift nun allerdings die einzelnen Brennelemente mit größerem Impuls, wodurch mehr Verunreinigungspartikel von der Oberfläche der einzelnen Brennelemente 2 abgelöst werden können, d.h. die Reinigung der Brennelmente ist effektiver im Vergleich zu der zu Figur 1 beschriebenen Vorgehensweise.

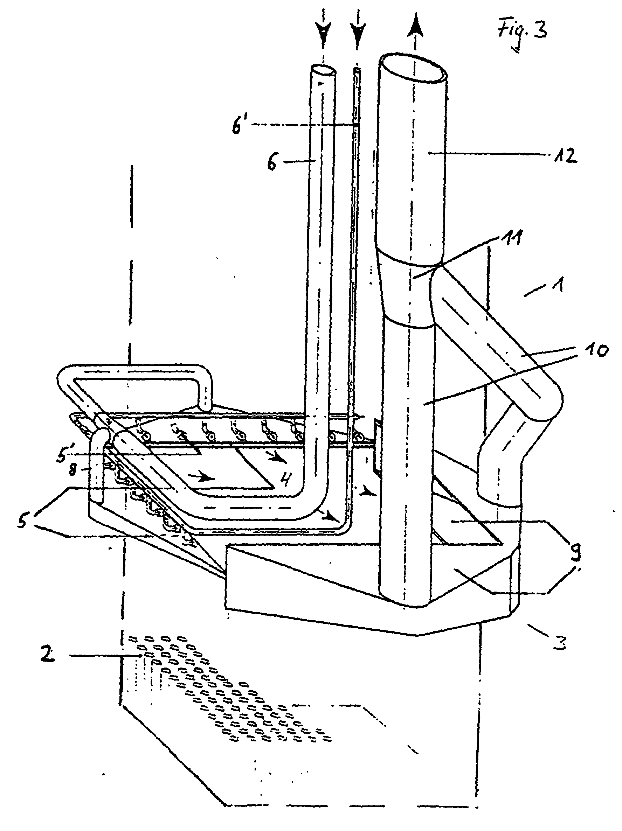

In Figur 3 ist nochmals eine weitere erfindungsgemäße Vorrichtung 1 zur Umspülung mindestens eines Stabelementes mit mindestens einer Flüssigkeit und/oder einem Gas dargestellt. Auch die hier dargestellte Vorrichtung 1 dient speziell der Reinigung eines Bündels von Brennelementen 2 während dessen Ausbau aus dem Reaktordruckgefäß oder aus einem Lagergestell. Die hier gezeigte Vorrichtung 1 ist eine Kombination aus der in Figur 1 und der in Figur 2 dargestellten Vorrichtungen. Die Gesamtheit der Ableitungen ist analog zu der in Figur 1 bzw. Figur 2 dargestellten. Die hier dargestellte Vorrichtung 1 weist ebenfalls einen rechteckigen Rahmen 3 auf, besitzt aber zwei verschiedenartige Zuleitungen, die wahlweise genutzt werden können. Die Zuleitung 6 ist ähnlich wie in Figur 1 ausgestaltet und erlaubt eine Arbeitsweise unter Niederdruck. Die entsprechenden Ausströmöffnungen 5 sind genau wie in Figur 1 schlitzartige, sich über die ganze Seitenlänge erstreckende Öffnungen. Die andere, wahlweise zur Verfügung stehende Zuleitung 6' ist analog zu Figur 2 im Querschnitt vergleichsweise sehr klein. Die zugehörigen düsenförmigen Ausströmöffnungen 5' sind ebenfalls in ihrem Querschnitt wesentlich kleiner als die Ausströmöffnungen 5. Die Kombination der beiden Ausführungsformen aus Figur 1 und 2 macht eine flexible Arbeitsweise möglich. Je nach Grad der Verschmutzung der Brennelemente 2 kann man unter Nieder- oder unter Hochdruck arbeiten.

Die vorliegende Erfindung stellt somit eine Vorrichtung und ein Verfahren zur Umspülung, insbesondere zur Reinigung von Brennelementen dar, die eine schnelle und einfache Behandlung vor Ort erlauben.

## Patentansprüche

1. Verfahren zur Umspülung mindestens eines Brennelements mit mindestens einer Flüssigkeit und/oder mindestens einem Gas, mit den folgenden Schritten:
a) Zuleiten der mindestens einen Flüssigkeit und/oder des mindestens einen Gases zu dem mindestens einen Brennelement,
b) Absaugen von Flüssigkeit und/oder Gas von Absaugöffnungen, die an mindestens einem zweiten Umfangsabschnitt eines Rahmens angeordnet sind, und
c) Durchführen des mindestens einen Brennelements durch den Rahmen.
**dadurch gekennzeichnet, dass**
die Schritte a) - c) gleichzeitig mit dem Herausheben des Brennelements aus einem Lagergestell oder einem Gestell im Reaktordruckgefäß ablaufen.

2. Verfahren nach Anspruch 1, **dadurch gekennzeichnet, dass** in Schritt a) die Zuleitung der mindestens einen Flüssigkeit und/oder des mindestens einen Gases zu Ausströmöffnungen erfolgt, die an mindestens einem ersten Umfangsabschnitt eines Rahmens angeordnet sind, und die die mindestens eine Flüssigkeit und/oder das mindestens eine Gas dem Brennelement zuführen.

3. Verfahren nach Anspruch 2, **dadurch gekennzeichnet, dass** in Schritt a) die mindestens eine Flüssigkeit und/oder das mindestens eine Gas mit einem Druck zwischen 3 bar und 150 bar, vorzugsweise zwischen 10 bar und 30 bar, eingeleitet wird.

4. Vorrichtung zur Durchführung des Verfahrens nach Anspruch 1, wobei die Vorrichung oberhalb eines Bündels von Brennelementen in einem Gestell eines Reaktordruckgefäβes oder einem Lagergestell angeordnet ist und mindestens die folgenden Elemente aufweist:
a) mindestens einen Rahmen mit einer Oberseite und einer Unterseite und mit mindestens einem ersten und mindestens einem zweiten Umfangsabschnitt zum Durchführen des mindestens einen Brennelements, wobei
b) der Rahmen in mindestens dem zweiten Umfangsabschnitt mindestens eine Absaugöffnung für Flüssigkeit und/oder Gas aufweist, und wobei
c) die Vorrichtung mindestens eine Ableitung für Flüssigkeit und/oder Gas von der mindestens einen Absaugöffnung des Rahmens aufweist.

5. Vorrichtung nach Anspruch 4, **dadurch gekennzeichnet, dass** der Rahmen in mindestens dem ersten Umfangsabschnitt mindestens eine Ausströmöffnung für die mindestens eine Flüssigkeit und/oder das mindestens eine Gas aufweist und dass die Vorrichtung mindestens eine Zuleitung für die mindestens eine Flüssigkeit und/oder das mindestens eine Gas zu der mindestens einen Ausströmöffnung des Rahmens besitzt.

6. Vorrichtung nach einem der vorhergehenden Ansprüche, **dadurch gekennzeichnet, dass** eine Saugeinrichtung mit der mindestens einen Absaugöffnung des Rahmens verbunden ist.

7. Vorrichtung nach einem der vorhergehenden Ansprüche, **dadurch gekennzeichnet, dass** der Rahmen das Brennelement vollständig umschließt.

8. Vorrichtung nach einem der vorhergehenden Ansprüche, **dadurch gekennzeichnet, dass** an der Oberseite und/oder Unterseite des Rahmens mindestens ein Dichtelement derart angeordnet ist, dass eine Abdichtung gegenüber dem Brennelement erfolgt.

9. Vorrichtung nach einem der vorhergehenden Ansprüche, **dadurch gekennzeichnet, dass** der Rahmen eine Rechteckform aufweist, wobei zwei aneinander angrenzende Seiten des Rechtecks jeweils mindestens eine Ausströmöffnung und die anderen beiden Seiten jeweils mindestens eine Absaugöffnung aufweisen.

10. Vorrichtung nach einem der Ansprüche 5 bis 9, **dadurch gekennzeichnet, dass** die Gesamtheit der Ableitungen einen größeren Querschnitt aufweist als die Gesamtheit der Zuleitungen.

11. Vorrichtung nach einem der vorhergehenden Ansprüche, **dadurch gekennzeichnet, dass** der Rahmen mindestens eine Vorrichtung zur Erzeugung von Ultraschallschwingungen innerhalb des Rahmens aufweist.

12. Verwendung einer Vorrichtung nach einem der Vorrichtungsansprüche oder eines Verfahrens nach einem der Verfahrensansprüche zur Reinigung von Brennelementen von Kernkraftwerken.

## Claims

1. Method for flushing round at least one fuel rod with at least one liquid and/or at least one gas, having the following steps:
a) feeding said at least one liquid and/or said at least one gas to the at least one fuel rod,
b) sucking off liquid and/or gas by suction openings which are arranged at at least one second circumferential section of a frame, and
c) conveying said at least one fuel rod through the frame,
**characterized in that**
the steps a) to c) are carried out simultaneously with the lifting of the fuel rod out of a storage rack or a rack in the reactor pressure vessel.

2. Method according to claim 1, **characterized in that** in step a) the feeding of said at least one liquid and/or said at least one gas to pour-out openings takes place, which are arranged at at least one first circumference section of a frame, and which convey said at least one liquid and/or said at least one gas to the fuel rod.

3. Method according to claim 2, **characterized in that** in step a) said at least one liquid and/or said at least one gas is introduced with a pressure between 3 bar and 150 bar, preferably between 10 bar and 30 bar.

4. Apparatus for carrying out the method according to claim 1, wherein the apparatus is located above a bundle of fuel rods in a rack of a reactor pressure vessel or a storage rack and comprises at least the following elements:
a) at least one frame having a top side and a bottom side and having at least a first and at least a second circumference section for conveying through said at least one fuel rod, wherein
b) the frame comprises in at least said second circumference section at least one suction opening for liquid and/or gas, and wherein
c) the apparatus comprises at least one drain for liquid and/or gas from said at least one suction opening of the frame.

5. Apparatus according to claim 4, **characterized in that** the frame comprises in at least said first circumference section at least one pour-out opening for said at least one liquid and/or said at least one gas, and that the apparatus includes at least one feed-line for said at least one liquid and/or said at least one gas to the at least one pour-out opening of said frame.

6. Apparatus according to one of the preceding claims, **characterized in that** a suction equipment is connected with said at least one suction opening of said frame.

7. Apparatus according to one of the preceding claims, **characterized in that** the frame encompasses the fuel rod entirely.

8. Apparatus according to one of the preceding claims, **characterized in that** at said topside and/or said bottom side of said frame at least one sealing element is arranged in such a way that a seal with respect to the fuel rod is achieved.

9. Apparatus according to one of the preceding claims, **characterized in that** the frame comprises a rectangular shape, wherein two adjacent sides of said rectangle comprise respectively at least one pour-out opening and the other two sides respectively comprise at least one suction opening.

10. Apparatus according to one of the claims 5 to 9, **characterized in that** the totality of said drain comprises a bigger cross-section than the totality of the feed-lines.

11. Apparatus according to one of the preceding claims, **characterized in that** the frame comprises at least one device for generating ultra-sonic vibrations within the frame.

12. Utilization of apparatus according to one of the apparatus claims or a method according to one of the method claims for the cleaning of fuel rods of nuclear power stations.

## Revendications

1. Procédé pour le rinçage d'au moins un élément combustible avec au moins un liquide et/ou au moins un gaz, avec les étapes suivantes :
a) amenée du liquide, au nombre d'au moins un, et/ou du gaz, au nombre d'au moins un, à l'élément combustible au nombre d'au moins un,
b) aspiration du liquide et/ou du gaz par des orifices d'aspiration disposés dans au moins une seconde portion périphérique d'un cadre, et
c) passage de l'élément combustible, au nombre d'au moins un, à travers le cadre,
**caractérisé en ce que**
les étapes a) - c) se déroulent simultanément au levage de l'élément combustible à partir d'un support de stockage ou d'un support placé dans le caisson résistant de réacteur.

2. Procédé selon la revendication 1, **caractérisé en ce que**, à l'étape a), le liquide, au nombre d'au moins un, et/ou le gaz, au nombre d'au moins un, sont amenés à des orifices de sortie qui sont disposés dans au moins une portion périphérique d'un cadre et qui amènent le liquide, au nombre d'au moins un, et/ou le gaz, au nombre d'au moins un, à l'élément combustible.

3. Procédé selon la revendication 2, **caractérisé en ce que**, à l'étape a), le liquide, au nombre d'au moins un, et/ou le gaz, au nombre d'au moins un, sont admis à une pression comprise entre 3 bar et 150 bar, de préférence entre 10 bar et 30 bar.

4. Dispositif pour la réalisation du procédé selon la revendication 1, le dispositif étant disposé au-dessus d'un faisceau d'éléments combustibles dans un support d'un caisson résistant de réacteur ou dans un support de stockage et comportant au moins les éléments suivants :
a) au moins un cadre avec un côté haut et un côté bas et avec au moins une première et au moins une seconde portion périphérique pour le passage de l'élément combustible au nombre d'au moins un,
b) le cadre étant pourvu, au moins dans la seconde portion périphérique, d'au moins un orifice d'aspiration pour du liquide et/ou du gaz, et
c) le dispositif comportant au moins une évacuation pour du liquide et/ou du gaz par l'orifice d'aspiration, au nombre d'au moins un, du cadre.

5. Dispositif selon la revendication 4, **caractérisé en ce que** le cadre comporte, au moins dans la première portion périphérique; au moins un orifice de sortie pour le liquide, au nombre d'au moins un, et/ou pour le gaz, au nombre d'au moins un, et **en ce que** le dispositif possède au moins une amenée pour le liquide, au nombre d'au moins un, et/ou pour le gaz, au nombre d'au moins un, à l'orifice de sortie, au nombre d'au moins un, du cadre.

6. Dispositif selon une des revendications précédentes, **caractérisé en ce qu'**un dispositif d'aspiration est relié à l'orifice d'aspiration, au nombre d'au moins un, du cadre.

7. Dispositif selon une des revendications précédentes, **caractérisé en ce que** le cadre entoure complètement l'élément combustible.

8. Dispositif selon une des revendications précédentes, **caractérisé en ce que** sur le côté haut et/ou le côté bas du cadre est disposé au moins un élément d'étanchéité, de façon à réaliser une étanchéité par rapport à l'élément combustible.

9. Dispositif selon une des revendications précédentes, **caractérisé en ce que** le cadre présente une forme rectangulaire, deux côtés adjacents du rectangle étant chacun pourvus d'un orifice de sortie et les deux autres côtés étant chacun pourvus d'un orifice d'aspiration.

10. Dispositif selon une des revendications 5 à 9, **caractérisé en ce que** les évacuations cumulées présentent une section transversale supérieure à celle des amenées cumulées.

11. Dispositif selon une des revendications précédentes, **caractérisé en ce que** le cadre comporte au moins un dispositif pour produire des vibrations ultrasonores à l'intérieur du cadre.

12. Utilisation d'un dispositif selon une des revendications de dispositif ou d'un procédé selon une des revendications de procédé pour le nettoyage d'éléments combustibles de centrale nucléaire.
